# EUROPEAN PATENT SPECIFICATION

(11) **EP 4 074 227 B1**
(45) Date of publication and mention of the grant of the patent: **11.10.2023**
(21) Application number: 21168446.9
(22) Date of filing: 14.04.2021
(51) Int. Cl.: A47J 31/44

(54) **BEVERAGE MACHINE**
GETRÄNKEMASCHINE
MACHINE À BOISSONS

(43) Date of publication of application: 19.10.2022
(73) Proprietor: BSH Hausgeräte GmbH, 81739 München (DE)
(72) Inventor: Lemez, Samo, 3327 Smartno ob Paki (SI); Leskovsek, Peter, 3333 Ljubno ob Savinji (SI); Mejac, Matej, 1431 Dol pri Hrastniku (SI); Semprimoznik, Ales, 3330 Mozirje (SI); Vehovar, Sebastijan, 2310 Slovenska Bistrica (SI); Zavolovsek, Branko, 3330 Mozirje (SI)

(56) References cited:
- EP-A1- 2 548 482
- EP-A1- 3 053 493
- CN-A- 109 549 489
- DE-A1-102011 081 732

## Description

The present invention relates to a beverage machine, in particular a coffee machine, with a height-adjustable beverage outlet unit, such as a fully automatic coffee machine, with a housing and with the beverage outlet unit which is arranged in a front wall of the housing, and the height-adjustable beverage outlet unit is vertically adjustable.

Beverage preparing machines can be used for different applications. A preferred use of a beverage preparing machine is as an automatic coffee maker. Such beverage preparing machines usually have a beverage outlet which is vertically adjustable by an actuator and adapted to dispense a beverage into at least one receptacle. Beverage preparing machines that allow the beverage outlet to be adjusted in height, either manually or by the actuator. In most cases, an electric motor is used as the actuator, but other actuators may also be used, such as electromagnetic or hydraulic actuators. The beverage outlet is moved by the actuator or manually toward the receptacle to a point where appropriate splash protection is provided. That point is generally the case when the beverage outlet is located closely above the receptacle or rests on the edge of the it. In this position, dispensing nozzles of the beverage outlet openings are directed into the receptacle, which has the advantage that no splashing can occur during the dispensing of the beverage, especially when making coffee with frothed milk, for instance a cappuccino.

Document EP3053493A1 discloses a beverage preparation device, in particular a coffee machine, with a housing and with a beverage outlet unit that is height-adjustable along a vertical axis and is arranged in front of a front wall of the housing extending opening is arranged, through which at least one beverage supply line extends, with which the beverage outlet unit is connected in a fluid-conducting manner with beverage preparation means and wherein cover means are connected to the beverage outlet unit in such a way that they are connected by manual or automatic means Adjustment of the beverage outlet unit can be moved together with it and cover a section of the opening not covered by the beverage outlet unit and the cover means are assigned deflection means with which the cover means relative to the vertical axis inside the housing can be deflected, the covering means comprising at least one multi-link plate chain which comprise a plurality of preferably identical plate links which are articulated to one another.

Document EP1 199016A1 discloses a coffee machine having a housing, at least one height-adjustable outlet for a beverage product and a height-adjustable front panel, and the front panel comprises operating elements, a guide recess for the adjustable outlet and a limit stop for the height-adjustability of the outlet and the outlet is height-adjustable independently of the front panel and the front panel is manually movable via a slide guide. Additionally, the front panel is height-adjustable against the action of a weight-balancing device.

Document EP2548482A1 discloses a be machine has a rotatable guiding element designed as a threaded rod, formed at the machine and guided to a vertically adjustable beverage outlet over a socket element. An annular driver is arranged on the socket element and pre-tensioned against the guiding element that is provided with a screw thread, where the guiding element is manually rotated by a rotating movement or a rectilinear movement. The guiding element is electromotive-rotated by an electromotor that is blocked in an interior region of the guiding element. The driver includes two axial legs. This solution, because of its structure does not allow manually movement of coffee outlet by user.

Document EP2740391A1 discloses a beverage machine having a discharge unit that has two parallel guide rails that are fixed on a base frame. A carriage is arranged and guided on guide sleeves to slide on the two guide rails. A fixing element is provided to automatically lock the carriage at an arbitrary position along the guide rails. The discharge unit is designed as a preassembled module. An electrical drive device is provided to electrically adjust the carriage along the guide rails.

Presented solutions are complicated in practice, comprises many components, to be mounted together, what causes that assembling the machine is complicated and the production is expensive. Moreover, this increases time required for the assembling and increases risk for incorrect assembling. Furtherly, known solutions, that have a driven by an electric motor a height adjustment coffee outlet mechanism, don't allow manual height adjustment of coffee outlet by user.

It is the object of the present invention to overcome problems associated with known solutions and provide reliable and robust solution for height adjustment mechanism of the beverage discharge unit, that is prevented from damage when the beverage discharge unit is accidently blocked. It is a still further object of the invention is provide to a user the device that has improved protection against hot water or steam, produced inside the device.

In accordance with the present invention, there is provided a beverage machine, in particular a coffee machine, with a housing and with a beverage discharge unit which is arranged in front of a housing front wall and which is height-adjustable along a vertical axis by a height adjustment mechanism. In the housing front wall an extending along the vertical axis opening is arranged. Through the said opening extends at least one beverage supply line, with which the beverage discharge unit with a beverage preparation means is connected in a fluid-conducting manner. The beverage discharge unit is equipped with a discharge unit head. They are connected together in such a way that they can be adjusted by adjusting the beverage discharge unit or the discharge unit head and can be moved together with a covering means, that covers portion of the opening not covered by the beverage discharge unit and the discharge unit head that are connected to it. The height adjustment mechanism comprises an electric motor that rotates a threaded lifting screw extending through and engaged with a lifting nut, and in that the lifting nut is formed by halves of the lifting nut that are resiliently fixed each other around the lifting screw by a compression mean. So, present invention provide solution of the height adjustment mechanism that is protected from overloading caused by blocking the beverage discharge unit or the beverage unit head. The said protection is achieved by the detachable engagement of the lifting screw and the lifting nut, namely when the forces acting between the lifting screw and the lifting nut exceed predetermined value, halves of the lifting nut are opening apart, what causes that they stop being coupled, and the lifting screw can be rotated, but they still stay together because of the compression mean acting. So, the height adjustment mechanism and the electric engine that rotates the lifting screw is therefore protected.

In the preferred embodiment of the invention the height adjustment mechanism has a mounting brace substantially in the shape of letter "C", that is fixed to the housing front wall, and between arms of the mounting brace, the lifting screw with the lifting nut extends, wherein the lifting nut is firmly connected to the beverage discharge unit, and the electric motor is connected to the mounting brace and/or to the housing front wall. Therefore movement of the beverage discharge unit in relation to the housing front part is provided. The positive effect is that tightness of the connection is guaranteed. The solution is cheap in the production and convenient during assembling.

In the another preferred embodiment of the invention the height adjustment mechanism has a mounting brace that is fixed to the beverage discharge unit, and supports the lifting screw with the lifting nut and the electric motor, wherein the lifting nut is firmly connected to the housing front wall. So, this provides another variant of the height adjustment mechanism of the beverage discharge unit that can be moved in relation to the housing front part, that can be implemented in the beverage machine.

Preferable the lifting nut is provided with a nut thread disposed in engagement, with formation of non-self-locking thread with a lifting screw thread of the lifting screw, which is lockable from gravitational force caused by weight of the beverage discharge unit connected together with the discharge unit head. The positive aspect of this is in that non-self-locking thread that engages the lifting screw and the lifting nut causes that the beverage discharge unit with the beverage discharge head can be moved manually by a user.

In the another preferred embodiment of the invention halves of the lifting nut are connected by a hinge that is disposed in the longitudinal direction on one of ends of the said halves, and the said halves are compressed by the compression mean as a compression wire spring. The positive effect of this is in that the hinge and the wire spring provide stable engagement and keep the said halves together even if they partially opened apart. So, that solution is easy to implement and cost effective in production and provides.

Preferably the lifting screw is rotated by the electric engine directly or indirectly by the toothed gear. The positive effect of this is in that the direct the lifting screw drive is cheap, because it does not require additional parts. While, indirect the lifting screw drive, for instance by toothed gear, gives more option to arrange driving of the lifting screw.

In the another preferred embodiment of the invention the covering mean is formed by a series of slats arranged in vertical order and connected each other with longer sides by a slat hinge. Preferable the slat hinge is formed as integrated hinge or life hinge, and the slat hinge covers connection line that is between the slats. Therefore, there is no slots between slats, so a user is better protected against the hot water or steam produced inside the device.

Preferable the housing front wall is provided with two slat rails, each of them provided with a groove formed substantially in the shape of inverted letter "L", that are disposed on the inner side of the housing front wall, wherein the said slat rails extend partially vertically along both side the opening and partially extending substantially horizontally inwardly of the housing. The positive effect of this is in that the invention provides durable solution for supporting the covering mean, furtherly increases stiffness of the front wall.

In the another preferred embodiment of the invention the housing front wall is formed as a module that comprises at least the front frame, an intermediate part, the beverage discharge unit, the discharge head, and a front panel, wherein the beverage discharge unit is movable assembled to the front frame by two guide columns that are fixed to the front frame. Furtherly the discharge head is connected to the beverage discharge unit by a fixing rib disposed on the discharge head and by two screws is screwed through opening of the beverage discharge unit, and the intermediate part and the front frame are connected together by two fixing hitches, two protrusions placed on the front frame and corresponding two openings and a holder placed on the intermediate part, and in that a front panel is connected to the front frame by two pins that are disposed on the upper portion of the front frame and correspondent two openings in the upper portion of the front panel and two screws that fix lower portion of the front panel with lower portion of the front frame. The positive effect of the invention that the front wall is mounted as a module, what is convenient for assembling and reduces possibilities to make mistakes by employees, after assembling this module is connected to the housing of the device.

Further benefits and advantages of the present invention will become apparent after a careful reading of the detailed description with appropriate reference to the accompanying drawings.

In the drawings:
- Fig. 1: shows a front wall of the coffee machine.
- Fig. 2: shows a covering means.
- Fig. 3: shows a height adjustment mechanism.
- Fig. 4: shows the enlarged area "A" from fig.3.
- Fig. 5: shows an another variant of the height adjustment mechanism.
- Fig. 6: shows an another variant of the height adjustment mechanism.
- Fig. 7: shows a front wall in a front view.
- Fig. 8: shows rear side of a front wall.
- Fig. 9: shows a cross-section through a front wall.

In cooperation with attached drawings, the technical contents and detailed description of the present invention are described thereinafter according to a preferable embodiment, being not used to limit its executing scope.

In the following description of the preferred embodiments of the present invention, similar identical reference numbers designate identical or comparable components.

Typically, coffee machines employ different systems for preparing beverages such as coffee, tea or chocolate. Coffee machine usually comprises a housing with a tank, a coffee grinder, a brewing unit, a frothing unit, a drip tray, a beverage outlet that is placed on the front wall for ease of use. During the brewing process a portion of hot water passes through the coffee powder in order to prepare a coffee. For preparing cappuccino, the automated machine is provided with a steam conduit where a stream of the steam draws air into the pipe to mix it with steam and to froth a quantity of milk when the resulting mixture is admitted into a milk. The machine provides a certain pressure, water flow amount, time duration and temperature. So, such devices are complicated in assembling and expensive to produce. The housing provides to a user protection against the hot water or steam that is produced inside. Also the housing has a beverage outlet that advantageously can be adjustable for the purpose of setting close distance between a dispenser and the beverage outlet unit to avoid splashing prepared drink. It's desirable that adjusting is maintained by an electric motor, but manual correction of the beverage outlet unit position is an additional advantage. Therefore it is important to provide durable, reliable and cheap solution that can realize aforementioned requirements in the device.

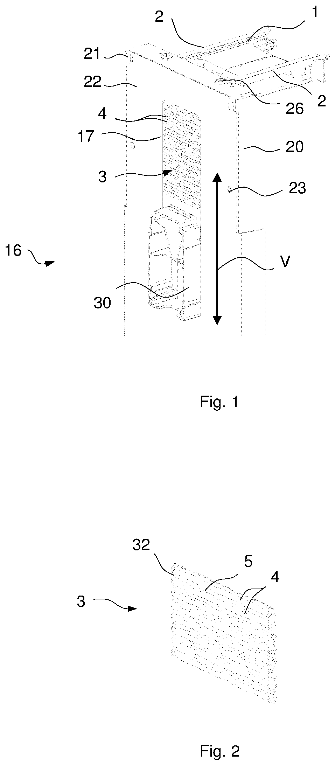

Fig.1 shows a front wall 16 of the coffee machine. The coffee machine, has a housing with a front wall 16 and a beverage discharge unit 30 which is arranged in the housing front wall 16 and which is height-adjustable along a vertical axis V by a height adjustment mechanism 18 (not shown on this figure). The housing front wall 16 is formed by a front frame 20 and an intermediate part 22, they are fixed together by two fixing hitches 21 that are disposed on an upper portion of the front frame 20, and two protrusion 23 that are disposed on the front frame 20 and two openings in the intermediate part 22. In the housing front wall 16, an opening 17 is arranged, that extends along the vertical axis V. Throughout the opening 17 extends at least one beverage supply line, with which the beverage discharge unit 30 is connected in a fluid-conducting manner with a beverage preparation means (not shown on this figure). A discharge unit head 24 (not shown on this figure) is connected to the beverage discharge unit 30 in such a way that they can be adjusted by adjusting the beverage discharge unit 30 or the discharge unit head 24 and can be moved together with a covering means 3 of the opening 17, that covers portion of the opening 17 not covered by the beverage discharge unit 30 and the discharge unit head 24 that is connected to it. The front frame 20 is provided with two slat rails 2, each of them provided with a groove 1. The said rails 2 are formed substantially in the shape of inverted letter "L", that are disposed on the inner side of the housing front wall 16, and the said slat rails 2 extend partially vertically along both side the opening 17 and partially extending substantially horizontally inwardly of the housing.

Fig.2 shows a covering means 3 according to the invention. The covering mean 3 is formed by a series of slats 4 arranged in vertical order. Between each of the slats 4 a connection line 32 is formed. The said slats 4 are connected each other with longer sides by a slat hinge 5 as a life hinge. The slat hinge 5 totally covers connection line 32.

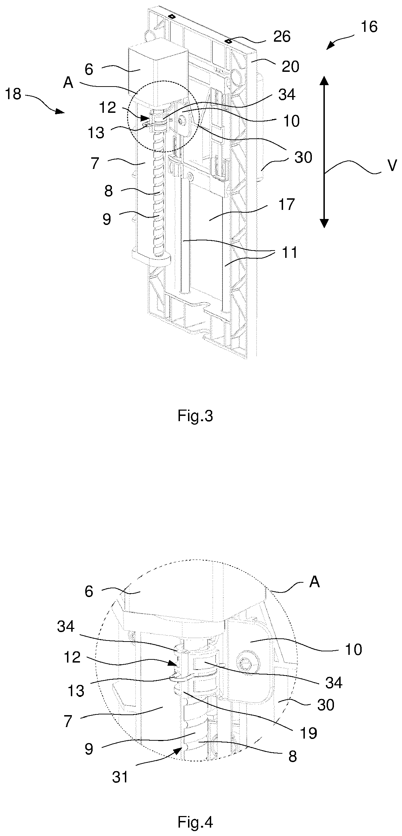

Fig. 3 and Fig. 4 show a height adjustment mechanism that is placed in a beverage machine according to the present invention. The coffee machine, has a housing with a front wall 16 and a beverage discharge unit 30 which is arranged in the housing front wall 16 and which is height-adjustable along a vertical axis V by a height adjustment mechanism 18. The front wall 16 is formed by fixed together the front frame 20 and the intermediate portion 22. The opening 17 is arranged in the housing front wall 16, that extends along the vertical axis V. Throughout the opening 17 extends at least one beverage supply line, with which the beverage discharge unit 30 is connected in a fluid-conducting manner with a beverage preparation means (not shown on this figure). The beverage discharge unit 30 is movable fixed to the front frame 20 by two guide columns 11. The height adjustment mechanism 18 has a mounting brace 7 substantially in the shape of letter "C", that is fixed to the housing front frame 20, that forms the front wall 16. Between arms of the mounting brace 7, the lifting screw 9 with engaged the lifting nut 12 extends. The lifting screw 9 is rotated directly by an electric motor 6. The lifting nut 12 is formed by halves 34 of the lifting nut 12 that are resiliently fixed each other around the lifting screw 9 by a compression mean 13, as a wire spring. The lifting nut 12 is firmly connected to the beverage discharge unit 30 by a fixing potion 10, that extends from one of the halves 34. The lifting nut 12 is provided with a nut thread disposed in engagement, with formation of non-self-locking thread 31, with a lifting screw thread 8 of the lifting screw 9, which is lockable from gravitational force caused by weight of the beverage discharge unit 30. The halves 34 of the lifting nut 12 are connected by a hinge 19 as a life hinge, that is disposed in the longitudinal direction on one of ends of the said halves 34.

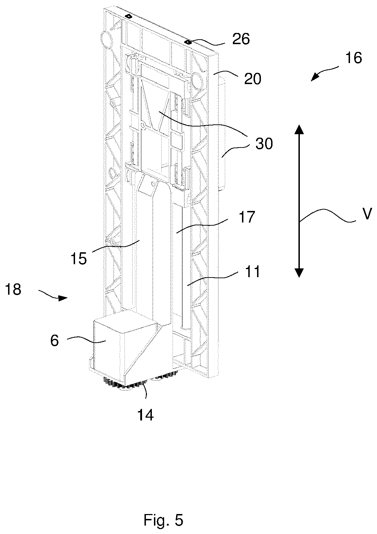

Fig. 5 shows another variant of the height adjustment mechanism. The coffee machine, has a housing with a front wall 16 and a beverage discharge unit 30 which is arranged in the housing front wall 16 and which is height-adjustable along a vertical axis V by a height adjustment mechanism 18. The front wall 16 is formed by fixed together the front frame 20 and the intermediate portion 22. The opening 17 is arranged in the housing front wall 16, that extends along its the vertical axis V. Throughout the opening 17 extends at least one beverage supply line, with which the beverage discharge unit 30 is connected in a fluid-conducting manner with a beverage preparation means (not shown on this figure). The beverage discharge unit 30 is movable fixed to the front frame 20 by two guide columns 11. The height adjustment mechanism 18 has a casing 15. The lifting screw 9 (not shown on this figure) is rotated by an electric motor 6 by a toothed gear 14, that is supported by the casing 15. The casing 15 is fixed to the beverage discharge unit 30, and supports the lifting screw 9 with the lifting nut 12 (not shown on this figure) and the electric motor 6, the lifting nut 12 is firmly connected to the housing front wall 16.

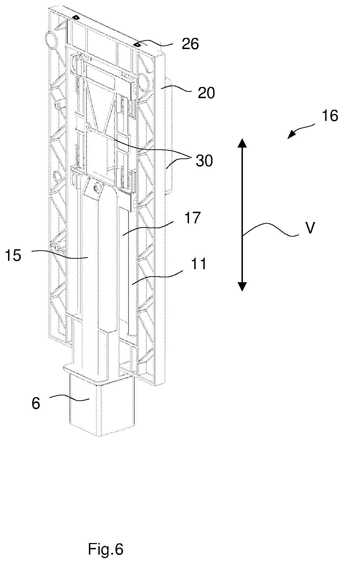

Fig. 6 shows one more variant of the height adjustment mechanism. The coffee machine, has a housing with a front wall 16 and a beverage discharge unit 30 which is arranged in the housing front wall 16 which is height-adjustable along a vertical axis V by a height adjustment mechanism 18. The front wall 16 is formed by fixed together the front frame 20 and the intermediate portion 22 (not shown on this figure). The opening 17 is arranged in the housing front wall 16, and extends along its vertical axis. Throughout the opening 17 extends at least one beverage supply line, with which the beverage discharge unit 30 is connected in a fluid-conducting manner with a beverage preparation means (not shown on this figure). The beverage discharge unit 30 is movable fixed relative to the front frame 20 by two guide columns 11. The height adjustment mechanism 18 has a casing 15. The lifting screw 9 (not shown on this figure) is rotated directly by an electric motor 6. The casing 15 is connected to the beverage discharge unit 30, and supports the lifting screw 9 (not shown on this figure) with the lifting nut 12 (not shown on this figure) and the electric motor 6. The lifting nut 12 is firmly connected to the housing front wall 16.

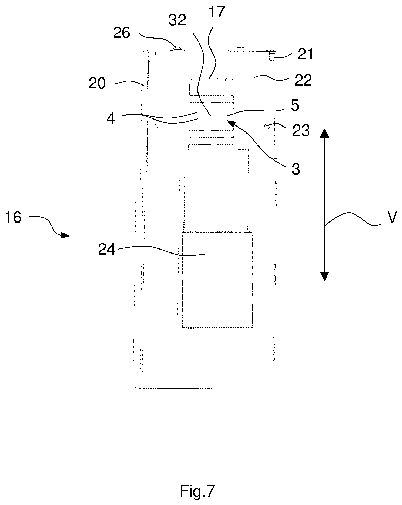

Fig. 7 shows a front wall in a front view. The coffee machine, has a housing with a front wall 16 and a beverage discharge unit 30 which is arranged in the housing front wall 16 and which is height-adjustable along a vertical axis V by a height adjustment mechanism 18 (not shown on this figure). The housing front wall 16 is formed by a front frame 20 and an intermediate part 22, they are fixed together by two fixing hitches 21 that are disposed on an upper portion of the front frame 20, and two protrusion 23 that are disposed on the front frame 20 and two openings in the intermediate part 22. In the housing front wall 16, an opening 17 is arranged, that extends along the vertical axis V. Throughout the opening 17 extends at least one beverage supply line, with which the beverage discharge unit 30 is connected in a fluid-conducting manner with a beverage preparation means (not shown on this figure). A discharge unit head 24 is connected to the beverage discharge unit 30 in such a way that they can be adjusted by adjusting the beverage discharge unit 30 or the discharge unit head 24 and can be moved together with a covering means 3 of the opening 17, that covers portion of the opening 17 not covered by the beverage discharge unit 30 and the discharge unit head 24 that is connected to it. The covering mean 3 is formed by a series of slats 4 arranged in vertical order. Between each of the slats 4 a connection line 32 is formed. The said slats 4 are connected each other with longer sides by a slat hinge 5 as a life hinge. The slat hinge 5 totally covers connection line 32. The upper horizontal portion of the front frame 20 has two pins 26 for mounting a front panel 25 (not shown on this figure).

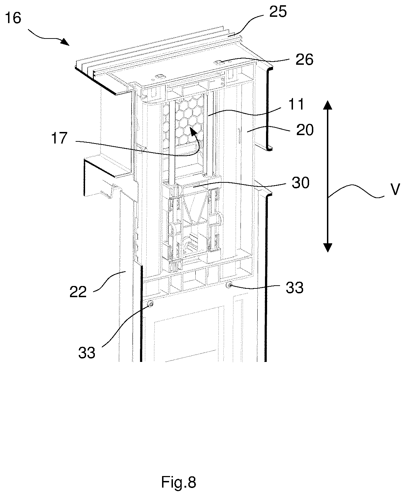

Fig. 8 shows rear side of a front wall. The coffee machine, has a housing with a front wall 16 and a beverage discharge unit 30 which is arranged in the housing front wall 16 and which is height-adjustable along a vertical axis V, by a height adjustment mechanism 18 (not shown on this figure). The housing front wall 16 is formed by a front frame 20 and an intermediate part 22, they are fixed each other. The beverage discharge unit 30 is movable connected to front frame 20 by two guide columns 11. In the housing front wall 16, an opening 17 is arranged, that extends along the vertical axis V. Throughout the opening 17 extends at least one beverage supply line, with which the beverage discharge unit 30 is connected in a fluid-conducting manner with a beverage preparation means (not shown on this figure). The upper horizontal portion of the front frame 20 has two pins 26 for mounting a front panel 25 and two screws 33 that fix lower portion of the front panel 25 with lower portion of the front frame 20.

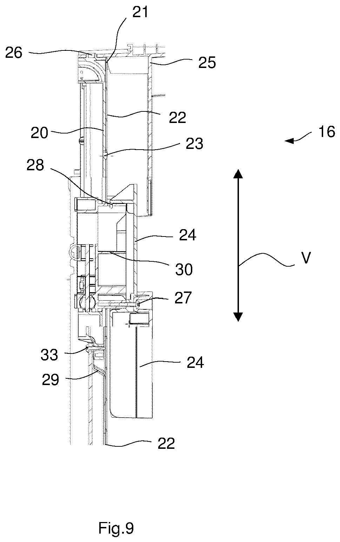

Fig. 9 shows a cross-section through a front wall 16. The front wall 16 is formed as a module that comprises at least the front frame 20, an intermediate part 22, the beverage discharge unit 30, the discharge head 24, and a front panel 25. The beverage discharge unit 30 is movable connected to the front frame 20 by two guide columns 11. The said guide columns 11 are fixed to the front frame 20. The discharge head 24 is connected to the beverage discharge unit 30, by a fixing rib 28 disposed on the discharge head 24 and by two screws 27. The screws 27 are screwed through openings against the beverage discharge unit 30. The intermediate part 22 and the front frame 20 are connected together by two fixing hitches 21 and two protrusions 23. The said protrusions 23 are placed on the front frame 20 and corresponding two openings, and a holder 29, of the intermediate part 22. The front panel 25 is connected to the front frame 20 by two pins 26 that are disposed on the upper portion of the front frame 20 and corresponding two openings in the upper portion of the front panel 25 and two screws 33, that fix a lower portion of the front panel 25 with a lower portion of the front frame 20.

Although the invention has been explained in relation to its preferred embodiment(s) as mentioned above, it is to be understood that many other possible modifications and variations can be made without departing from the scope of the present invention, which is defined by the claims.

### List of the reference signs

- 1: groove
- 2: slat rail
- 3: covering means
- 4: slat
- 5: hinge
- 6: electric motor
- 7: mounting brace
- 8: thread
- 9: lifting screw
- 10: fixing portion
- 11: guide column
- 12: lifting nut
- 13: compression mean
- 14: gear
- 15: casing
- 16: front wall
- 17: opening
- 18: height adjustment mechanism
- 19: hinge
- 20: front frame
- 21: fixing hitch
- 22: intermediate part
- 23: protrusion
- 24: discharge unit head
- 25: front panel
- 26: pin
- 27: screw
- 28: fixing rib
- 29: holder
- 30: beverage discharge unit
- 31: non-self-locking thread
- 32: connection line
- 33: screw
- 34: halves of the lifting nut

## Claims

1. Beverage machine, in particular a coffee machine, with a housing and with a beverage discharge unit (30) which is arranged in front of a housing front wall (16) and which is height-adjustable along a vertical axis (V) by a height adjustment mechanism (18), wherein in the housing front wall (16) an opening (17) extending along the vertical axis (V) is arranged, through which extends at least one beverage supply line, with which the beverage discharge unit (30) is connected in a fluid-conducting manner with a beverage preparation means and wherein a discharge unit head (24) is connected to the beverage discharge unit (30) in such a way that they can be adjusted by adjusting the beverage discharge unit (30) or the discharge unit head (24) and can be moved together with a covering means (3) of the opening (17), that covers a portion of the opening (17) not covered by the beverage discharge unit (30) and the discharge unit head (24) that is connected to it, **characterized in that** the height adjustment mechanism (18) comprises an electric motor (6) that rotates a threaded lifting screw (9) extending through and engaged with a lifting nut (12), and **in that** the lifting nut (12) is formed by halves (34) of the lifting nut (12) that are resiliently fixed each other around the lifting screw (9) by a compression mean (13).

2. Beverage machine according to claim 1, **characterized in that** the height adjustment mechanism (18) has a mounting brace (7) substantially in the shape of letter "C", that is fixed to the housing front wall (16), and **in that** between arms of the mounting brace (7), the lifting screw (9) with the lifting nut (12) extends, wherein the lifting nut (12) is firmly connected to the beverage discharge unit (30), and the electric motor (6) is connected to the mounting brace (7) and/or to the housing front wall (16).

3. Beverage machine according to claim 1, **characterized in that** the height adjustment mechanism (18) has a mounting brace (7) that is fixed to the beverage discharge unit (30), and supports the lifting screw (9) with the lifting nut (12) and the electric motor (6), wherein the lifting nut (12) is firmly connected to the housing front wall (16).

4. Beverage machine according to any claim from 1 to 3, **characterized in that** the lifting nut (12) is provided with a nut thread disposed in engagement, with formation of non-self-locking thread (31), with a lifting screw thread (8) of the lifting screw (9), which is lockable from gravitational force caused by weight of the beverage discharge unit (30) connected together with the discharge unit head (24).

5. Beverage machine according to any claim from 1 to 4, **characterized in that** the said halves (34) of the lifting nut (12) are connected by a hinge (19) that is disposed in the longitudinal direction on one of ends of the said halves (34), and **in that** the said halves (34) are compressed by the compression mean (13) as a compression wire spring.

6. Beverage machine according to any of the preceding claim, **characterized in that** the lifting screw (9) is rotated by the electric engine (6) directly or indirectly by the toothed gear (14).

7. Beverage machine according to any of the preceding claim, **characterized in that** the covering mean (3) is formed by a series of slats (4) arranged in vertical order and connected each other with longer sides by a slat hinge (5).

8. Beverage machine according to claim 7, **characterized in that** the said slats (4) are connected together by a slat hinge (5) as integrated hinge or life hinge, and **in that** the slat hinge (5) covers connection line (32) that is between the slats (4).

9. Beverage machine according to claim 7 or 8, **characterized in that** the housing front wall (16) is provided with two slat rails (2), each of them provided with a groove (1) formed substantially in the shape of inverted letter "L", that are disposed on the inner side of the housing front wall (16), wherein the said slat rails (2) extend partially vertically along both side the opening (17) and partially extending substantially horizontally inwardly of the housing.

10. Beverage machine according to any of the preceding claim, **characterized in that** the housing front wall (16) is formed as a module that comprises at least a front frame (20), an intermediate part (22), the beverage discharge unit (30), the discharge head (24), and a front panel (25), wherein the beverage discharge unit (30) is movable assembled to the front frame (20) by two guide columns (11), that are fixed to the front frame (20), and the discharge head (24) is connected to the beverage discharge unit (30) by a fixing rib (28) disposed on the discharge head (24) and by two screws (27) screwed through openings against the beverage discharge unit (30), and the intermediate part (22) and the front frame (20) are connected together by two fixing hitches (21), two protrusions (23) placed on the front frame (20) and corresponding two openings and a holder (29) placed on the intermediate part (22), and **in that** a front panel (25) is connected to the front frame (20) by two pins (26) that are disposed on the upper portion of the front frame (20) and corresponding two openings in the upper portion of the front panel (25) and two screws (33) that fix lower portion of the front panel (25) with lower portion of the front frame (20).

## Patentansprüche

1. Getränkeautomat, insbesondere Kaffeeautomat, mit einem Gehäuse und einer Getränkeabgabeeinheit (30), die vor einer Gehäusevorderwand (16) angeordnet und über einen Höhenverstellmechanismus (18) entlang einer vertikalen Achse (V) höhenverstellbar ist, wobei in der Gehäusevorderwand (16) eine entlang der vertikalen Achse (V) verlaufende Öffnung (17) angeordnet ist, durch die mindestens eine Getränkezuleitung verläuft, über die die Getränkeabgabeeinheit (30) flüssigkeitsleitend mit einem Getränkezubereitungsmittel verbunden ist, und wobei ein Kopfende (24) der Abgabeeinheit so mit der Getränkeabgabeeinheit (30) verbunden ist, dass sich beide durch Verstellen der Getränkeabgabeeinheit (30) oder des Kopfendes (24) der Abgabeeinheit verstellen und zusammen mit einem Abdeckmittel (3) der Öffnung (17) bewegen lassen, das einen Teil der Öffnung (17) abdeckt, der nicht von der Getränkeabgabeeinheit (30) und dem damit verbundenen Kopfende (24) der Abgabeeinheit abgedeckt wird, **dadurch gekennzeichnet, dass** der Höhenverstellmechanismus (18) einen Elektromotor (6) umfasst, der eine Hubspindel (9) dreht, die durch eine Spindelmutter (12) verläuft und in diese eingreift, und dass die Spindelmutter (12) von Hälften (34) der Spindelmutter (12) gebildet wird, die über ein Kompressionsmittel (13) um die Hubspindel (9) herum elastisch aneinander befestigt sind.

2. Getränkeautomat nach Anspruch 1, **dadurch gekennzeichnet, dass** der Höhenverstellmechanismus (18) eine Befestigungsstrebe (7) aufweist, die im Wesentlichen wie der Buchstabe "C" geformt und an der Gehäusevorderwand (16) befestigt ist, und dass zwischen Armen der Befestigungsstrebe (7) die Hubspindel (9) mit der Spindelmutter (12) verläuft, wobei die Spindelmutter (12) fest mit der Getränkeabgabeeinheit (30) und der Elektromotor (6) mit der Befestigungsstrebe (7) und/oder der Gehäusevorderwand (16) verbunden ist.

3. Getränkeautomat nach Anspruch 1, **dadurch gekennzeichnet, dass** der Höhenverstellmechanismus (18) eine Befestigungsstrebe (7) aufweist, die an der Getränkeabgabeeinheit (30) befestigt ist und die Hubspindel (9) mit der Spindelmutter (12) und den Elektromotor (6) trägt, wobei die Spindelmutter (12) fest mit der Gehäusevorderwand (16) verbunden ist.

4. Getränkeautomat nach einem der Ansprüche 1 bis 3, **dadurch gekennzeichnet, dass** die Spindelmutter (12) mit einem Muttergewinde versehen ist, das unter Bildung eines nicht selbstsichernden Gewindes (31) mit einem Hubspindelgewinde (8) der Hubspindel (9) in Eingriff steht, das aufgrund des Gewichts der mit dem Kopfende (24) der Abgabeeinheit verbundenen Getränkeabgabeeinheit (30) durch Schwerkraft sicherbar ist.

5. Getränkeautomat nach einem der Ansprüche 1 bis 4, **dadurch gekennzeichnet, dass** die Hälften (34) der Spindelmutter (12) über ein Scharnier (19) verbunden sind, das in Längsrichtung an einem der Enden der Hälften (34) angeordnet ist, und dass die Hälften (34) von dem Kompressionsmittel (13) als Druckfeder zusammengedrückt werden.

6. Getränkeautomat nach einem der vorhergehenden Ansprüche, **dadurch gekennzeichnet, dass** die Hubspindel (9) von dem Elektromotor (6) direkt oder indirekt über das Zahnrad (14) gedreht wird.

7. Getränkemaschine nach einem der vorhergehenden Ansprüche, **dadurch gekennzeichnet, dass** das Abdeckmittel (3) von einer Reihe von Leisten (4) gebildet wird, die in vertikaler Abfolge angeordnet und an den langen Seiten durch ein Leistenscharnier (5) miteinander verbunden sind.

8. Getränkeautomat nach Anspruch 7, **dadurch gekennzeichnet, dass** die Leisten (4) durch ein Leistenscharnier (5) als integriertes oder eigenständiges Scharnier miteinander verbunden sind und dass das Leistenscharnier (5) eine zwischen den Leisten (4) befindliche Verbindungslinie (32) abdeckt.

9. Getränkeautomat nach Anspruch 7 oder 8, **dadurch gekennzeichnet, dass** die Gehäusevorderwand (16) mit zwei Leistenschienen (2) versehen ist, von denen jede mit einer Nut (1) versehen ist, die im Wesentlichen in Form des umgekehrten Buchstabens "L" ausgebildet ist, und die an der Innenseite der Gehäusevorderwand (16) angeordnet sind, wobei die Leistenschienen (2) teilweise vertikal an beiden Seiten der Öffnung (17) entlang und teilweise im Wesentlichen horizontal in das Gehäuse hinein verlaufen.

10. Getränkeautomat nach einem der vorhergehenden Ansprüche, **dadurch gekennzeichnet, dass** die Gehäusevorderwand (16) als Modul ausgebildet ist, das zumindest einen vorderen Rahmen (20), ein Zwischenteil (22), die Getränkeabgabeeinheit (30), das Kopfende (24) der Abgabe und eine Frontblende (25) umfasst, wobei die Getränkeabgabeeinheit (30) über zwei Säulen (11), die an dem vorderen Rahmen (20) befestigt sind, beweglich am vorderen Rahmen (20) montiert und das Kopfende (24) der Abgabe über eine daran angeordnete Befestigungsrippe (28) und zwei in Öffnungen in die Getränkeabgabeeinheit (30) geschraubte Schrauben (27) mit der Getränkeabgabeeinheit (30) verbunden ist und das Zwischenteil (22) und der vordere Rahmen (20) über zwei Befestigungshaken (21), zwei Vorsprünge (23) am vorderen Rahmen (20) und zwei entsprechende Öffnungen und eine Halterung (29) am Zwischenteil (22) miteinander verbunden sind, und dass eine Frontblende (25) über zwei Stifte (26), die an dem oberen Teil des vorderen Rahmens (20) angeordnet sind, und zwei entsprechende Öffnungen im oberen Teil der Frontblende (25) und zwei Schrauben (33), die den unteren Teil der Frontblende (25) am unteren Teil des vorderen Rahmens (20) befestigen, mit dem vorderen Rahmen (20) verbunden ist.

## Revendications

1. Machine à boisson, en particulier machine à café, comprenant un boîtier et une unité de distribution de boisson (30) qui est agencée devant une paroi avant de boîtier (16) et qui est ajustable en hauteur le long d'un axe vertical (V) par un mécanisme de réglage en hauteur (18), dans laquelle une ouverture (17) s'étendant le long de l'axe vertical (V) est ménagée dans la paroi avant de boîtier (16), à travers laquelle s'étend au moins une ligne d'alimentation de boisson, avec laquelle l'unité de distribution de boisson (30) est connectée de manière à acheminer un fluide à un moyen de préparation de boisson, et
dans laquelle une tête d'unité de distribution (24) est connectée à l'unité de distribution de boisson (30) de telle manière qu'elles peuvent être ajustées en ajustant l'unité de distribution de boisson (30) ou la tête de distribution de boisson (24) et peuvent être déplacées ensemble avec un moyen de recouvrement (3) de l'ouverture (17), qui recouvre une partie de l'ouverture (17) non recouverte par l'unité de distribution de boisson (30) et la tête d'unité de distribution (24) qui est connectée à celle-ci,
**caractérisée en ce que** le mécanisme d'ajustement en hauteur (18) comprend un moteur électrique (6) qui fait tourner une vis filetée de levage (9) s'étendant à travers et engrenée avec un écrou de levage (12), et **en ce que** l'écrou de levage (12) est formé par des moitiés (34) de l'écrou de levage (12) qui sont fixées de manière résiliente l'une à l'autre autour de la vis de levage (9) par un moyen de compression (13).

2. Machine à boisson selon la revendication 1, **caractérisée en ce que** le mécanisme d'ajustement en hauteur (18) comprend un étrier de montage (7) sensiblement en forme de « C », qui est fixé à la paroi avant de boîtier (16), et **en ce que** la vis de levage (9) s'étend avec l'écrou de levage (12) entre des bras de l'étrier de montage (7),
dans laquelle l'écrou de levage (12) est connecté de façon solide à l'unité de distribution de boisson (30), et le moteur électrique (6) est connecté à l'étrier de montage (7) et/ou à la paroi avant de boîtier (16).

3. Machine à boisson selon la revendication 1, **caractérisée en ce que** le mécanisme d'ajustement en hauteur (18) comprend un étrier de montage (7) qui est fixé à l'unité de distribution de boisson (30), et supporte la vis de levage (9) avec l'écrou de levage (12) et le moteur électrique (6), dans laquelle l'écrou de levage (12) est connecté fermement à la paroi avant de boîtier (16).

4. Machine à boisson selon l'une quelconque des revendications 1 à 3, **caractérisée en ce que** l'écrou de levage (12) est doté d'un filetage d'écrou en prise avec un filetage de vis de levage (8) de la vis de levage (9), avec une formation d'un filetage non autobloquant (31), qui est blocable par la force de gravité engendrée par le poids de l'unité de distribution de boisson (30) connectée ensemble avec la tête d'unité de distribution de boisson (24).

5. Machine à boisson selon l'une quelconque des revendications 1 à 4, **caractérisée en ce que** lesdites moitiés (34) de l'écrou de levage (12) sont connectées par une charnière (19) qui est disposée dans la direction longitudinale sur l'une des extrémités desdites moitiés (34), et **en ce que** lesdites moitiés (34) sont comprimées par le moyen de compression (13) sous forme d'un ressort en fils de compression.

6. Machine à boisson selon l'une quelconque des revendications précédentes, **caractérisée en ce que** la vis de levage (9) est mise en rotation par le moteur électrique (6) directement ou indirectement par la roue dentée (14).

7. Machine à boisson selon l'une quelconque des revendications précédentes, **caractérisée en ce que** le moyen de recouvrement (3) est formé par une série de lamelles (4) disposées en ordre vertical et connectées l'une à l'autre avec les côtés longs par une charnière de lamelle (5).

8. Machine à boisson selon la revendication 7, **caractérisée en ce que** lesdites lamelles (4) sont connectées ensemble par une charnière de lamelle (5) sous forme de charnière intégrée ou de charnière robuste, et **en ce que** la charnière de lamelle (5) recouvre une ligne de connexion (32) qui est entre les lamelles (4).

9. Machine à boisson selon la revendication 7 ou 8, **caractérisée en ce que** la paroi avant de boîtier (16) est pourvue de rails de lamelle (2), chacun d'entre eux étant pourvu d'une rainure (1) formée sensiblement sous la forme d'une lettre « L » inversée, qui sont disposés sur le côté intérieur de la paroi avant de boîtier (16), dans laquelle lesdits rails de lamelle (2) s'étendent en partie verticalement le long des deux côtés de l'ouverture (17) et s'étendant en partie sensiblement horizontalement vers l'intérieur du boîtier.

10. Machine à boisson selon l'une quelconque des revendications précédentes, **caractérisée en ce que** la paroi avant de boîtier (16) est constituée sous forme d'un module qui comprend au moins un cadre avant (20), une partie intermédiaire (22), l'unité de distribution de boisson (30), la tête de distribution (24), et un panneau avant (25),
dans laquelle l'unité de distribution de boisson (30) est mobile, lorsqu'elle est assemblée au cadre avant (20), par deux colonnes guides (11), qui sont fixées au cadre avant (20), et la tête de distribution (24) est connectée à l'unité de distribution de boisson (30) par une nervure de fixation (28) disposée sur la tête de distribution (24) et par deux vis (27) vissées à travers des ouvertures contre l'unité de distribution de boisson (30), et
la partie intermédiaire (22) et le cadre avant (20) sont connectés ensemble par deux attaches de fixation (21), deux parties saillantes (23) placées sur le cadre avant (20) et deux ouvertures correspondantes et un support (29) placé sur la partie intermédiaire (22), et
**en ce qu'**un panneau avant (25) est connecté au cadre avant (20) par deux broches (26) qui sont disposées sur la partie supérieure du cadre avant (20) et deux ouvertures correspondantes dans la partie supérieure du panneau avant (25) et deux vis (33) qui fixent une partie inférieure du panneau avant (25) avec une partie inférieure du cadre avant (20).
